# EUROPEAN PATENT APPLICATION

(11) **EP 4 579 792 A1**
(43) Date of publication of application: **02.07.2025**
(21) Application number: 24221736.2
(22) Date of filing: 19.12.2024
(51) Int. Cl.: H01M 4/134, H01M 4/1395, H01M 4/38, H01M 10/052, H01M 10/42, H01M 10/0562, H01M 4/36, H01M 4/02

(54) **PROTECTIVE FILM FOR LITHIUM METAL ANODE, LITHIUM METAL ANODE, METHOD OF PREPARING LITHIUM METAL ANODE, AND LITHIUM METAL BATTERY**

(30) Priority: 28.12.2023 KR 20230195691
(71) Applicant: SK On Co., Ltd., Seoul 03161 (KR)
(72) Inventor: PARK, Seong Jin, 34124 Daejeon (KR)
(74) Representative: Prüfer & Partner mbB Patentanwälte · Rechtsanwälte

(57) **Abstract**

A lithium metal anode protective film includes lithium nitride (Li₃N) nanoparticles, lithium-magnesium (Li-Mg) alloy nanoparticles, or a combination thereof.

The lithium metal anode protective film may induce uniform electrodeposition behavior and distribution of lithium ions, thereby effectively suppressing growth of lithium dendrites during battery a battery charging/discharging process.

## Description

### BACKGROUND

### 1. FIELD

The present disclosure relates to a lithium metal anode protective film, a lithium metal anode, a method of preparing the same, and a lithium metal battery.

### 2. DESCRIPTION OF THE RELATED ART

Interest in electric vehicles (EVs) capable of replacing fossil fuel-based vehicles, one of the main causes of air pollution, has been continuously increasing, and lithium secondary batteries, mainly used as power sources for electric vehicles (EVs) due to high discharge voltage and output stability thereof, have also been actively developed.

A lithium metal, having relatively a high capacity (3860 mAh/g) and a low redox potential (-3.04 V vs. SHE), has been recently attracted attention as one of promising anode materials, and lithium metal batteries including such lithium metal anodes (LMAs) have also been researched.

### SUMMARY

An aspect of the present disclosure is to inhibit growth of lithium dendrites by inducing uniform lithium electrodeposition.

Another aspect of the present disclosure is to provide a lithium metal anode protective film capable of improving electrochemical performance of a battery.

Another aspect of the present disclosure is to form a material for protecting a surface of a lithium metal layer on the surface of the lithium metal layer by an In-situ reaction.

Another aspect of the present disclosure is to prevent unnecessary formation of a material for stabilizing a lithium metal layer.

According to an aspect of the present disclosure, there is provided a lithium metal anode protective film including lithium nitride (Li₃N) nanoparticles, lithium-magnesium (Li-Mg) alloy nanoparticles, or a combination thereof.

The lithium metal anode protective film may further include magnesium nitride (Mg₃N₂) nanoparticles.

A diameter of each of the magnesium nitride (Mg₃N₂) nanoparticles may be greater than a diameter of each of the lithium nitride (Li₃N) nanoparticles and a diameter of each of the lithium-magnesium (Li-Mg) alloy nanoparticles.

The lithium metal anode protective film may further include lithium fluoride (LiF).

The lithium metal anode protective film may further include a polymer containing fluorine (F).

The polymer containing fluorine (F) may be polyvinylidene difluoride (PVDF), a polyvinylidene difluoride-hexafluoropropylene copolymer (PVDF-co-HFP), or a combination thereof.

The lithium metal anode protective film may further include magnesium nitride (Mg₃N₂) nanoparticles and a polymer containing fluorine (F). A weight of the magnesium nitride (Mg₃N₂) nanoparticles, included in the lithium metal anode protective film, may be greater than a weight of the polymer containing fluorine (F), included in the lithium metal anode protective film.

A diameter of each of the lithium nitride (Li₃N) nanoparticles and a diameter of each of the lithium-magnesium (Li-Mg) alloy nanoparticles may respectively be independently 1 to 200 nm.

A diameter of each of the magnesium nitride (Mg₃N₂) nanoparticles may be 1 to 200 nm.

A thickness of the lithium metal anode protective film may be 500 nm to 10 µm.

According to another aspect of the present disclosure, there is provided a lithium metal anode including a lithium metal anode protective film according to one of the above-described embodiments.

According to another aspect of the present disclosure, there is provided a method of preparing a lithium metal anode protective film, the method including preparing a solution including magnesium nitride (Mg₃N₂) nanoparticles; and forming a lithium metal anode protective film on at least one surface of a lithium metal layer using the solution.

The solution may further include a polymer containing fluorine (F).

The polymer containing fluorine (F) may be polyvinylidene difluoride (PVDF), a polyvinylidene difluoride-hexafluoropropylene copolymer (PVDF-co-HFP), or a combination thereof.

The solution may further include magnesium nitride (Mg₃N₂) nanoparticles and a polymer containing fluorine (F). A weight of the magnesium nitride (Mg₃N₂) nanoparticles, included in the solution, may be greater than a weight of the polymer containing fluorine (F), included in the solution.

According to another aspect of the present disclosure, there is provided a lithium metal battery including a lithium metal anode according to one of the above-described embodiments.

According to an embodiment of the present disclosure, uniform electrodeposition behavior and distribution of lithium ions may be induced.

According to another embodiment of the present disclosure, growth of lithium dendrites during a battery charging/discharging process may be effectively suppressed.

According to another embodiment of the present disclosure, a lithium metal battery may have improved performance.

According to another embodiment of the present disclosure, a material for protecting a surface of a lithium metal layer may be formed on the surface of the lithium metal layer by an In-situ reaction.

According to another embodiment of the present disclosure, unnecessary formation of a material for stabilizing a lithium metal layer may be prevented.

### BRIEF DESCRIPTION OF DRAWINGS

Certain aspects, features, and advantages of the present disclosure are illustrated by the following detailed description with reference to the accompanying drawings.
FIG. 1 is a schematic diagram illustrating a cross-section of a lithium metal anode according to an embodiment.
FIG. 2A is a diagram illustrating a scanning electron microscopy (SEM) analysis image and an energy dispersion spectroscopy (EDS) analysis image of a protective film surface on an anode according to an example.
FIG. 2B is a diagram illustrating an SEM analysis image and an EDS analysis image of a protective film surface on an anode according to Comparative Example 1.
FIG. 3A is a diagram illustrating a SEM analysis image and an EDS analysis image of a protective film surface after electrodeposition is performed on a lithium metal battery including an anode according to an example.
FIGS. 3B and 3C are diagrams illustrating results of observing, at different analysis positions, an SEM observation image and an EDS analysis image of an anode protective film surface on which lithium is electrodeposited by charging a lithium metal battery including an anode according to Comparative Example 1.

### DETAILED DESCRIPTION

Features of the present disclosure disclosed in this patent document are described by embodiments with reference to the accompanying drawings.

The present disclosure can be implemented in some embodiments to provide a lithium metal anode protective film, a lithium metal anode, a method of preparing the same, and a lithium metal battery.

Hereinafter, various embodiments of the present disclosure will be described. However, the embodiments are not limited to the embodiments described below, and may be modified into various other forms.

It will be understood that when an element such as a layer, film, think film, region, or is referred to as being "above" or "on" another element, the element may be "directly above" or "directly on" the other element or intervening elements may also be present.

In the lithium metal anode described above, continuous side reactions with an electrolyte may occur due to high reactivity of a lithium metal, resulting in formation of an unstable film and poor lifespan properties. In particular, lithium dendrites generated during battery charging/discharging may not only significantly reduce lifespan efficiency of a battery, but may also cause a sudden internal short-circuit, which may cause a fire and explosions.

In this regard, according to an embodiment, as a method of forming a protective film on a surface of lithium metal, a protective film prepared by an Ex-situ reaction from the outside of a cell may be formed on the surface of lithium metal. However, the protective film, prepared in the above-described manner, may be unstable in an electrochemical reaction internally occurring during a cell driving process, and an unnecessary material may be formed for stabilization of lithium metal.

When lithium metal is applied as an anode as described above, it may be difficult to ensure lifespan properties and the stability of a battery due to an issue such as formation of lithium dendrites or the like.

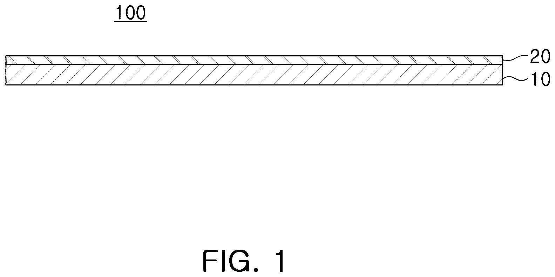

A lithium metal anode protective film according to an embodiment may include nano-sized lithium-containing particles, and thus may have excellent ion conductivity and electrochemical stability, and may induce uniform electrodeposition behavior of lithium ions. Hereinafter, details thereof will be described with reference to FIGS. 1 to 3C.

FIG. 1 is a schematic diagram illustrating a cross-section of a lithium metal anode according to an embodiment.

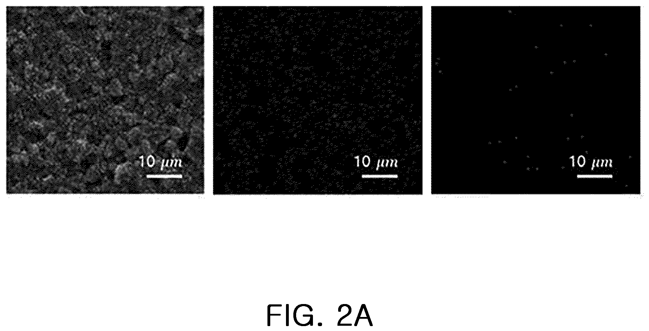

FIG. 2A is a diagram illustrating a scanning electron microscopy (SEM) analysis image and an energy dispersion spectroscopy (EDS) analysis image of a protective film surface on an anode according to an example.

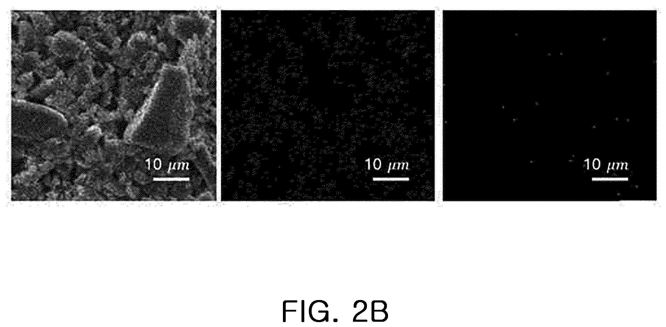

FIG. 2B is a diagram illustrating an SEM analysis image and an EDS analysis image of a protective film surface on an anode according to Comparative Example 1.

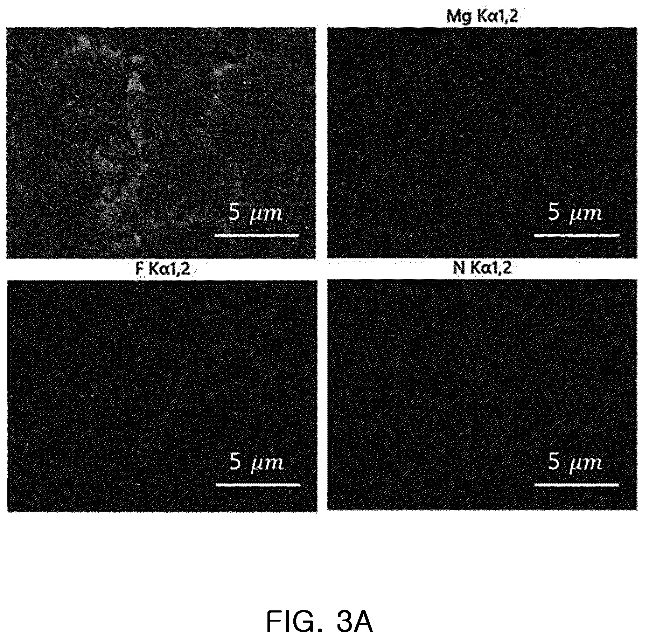

FIG. 3A is a diagram illustrating a SEM analysis image and an EDS analysis image of a protective film surface after electrodeposition is performed on a lithium metal battery including an anode according to an example.

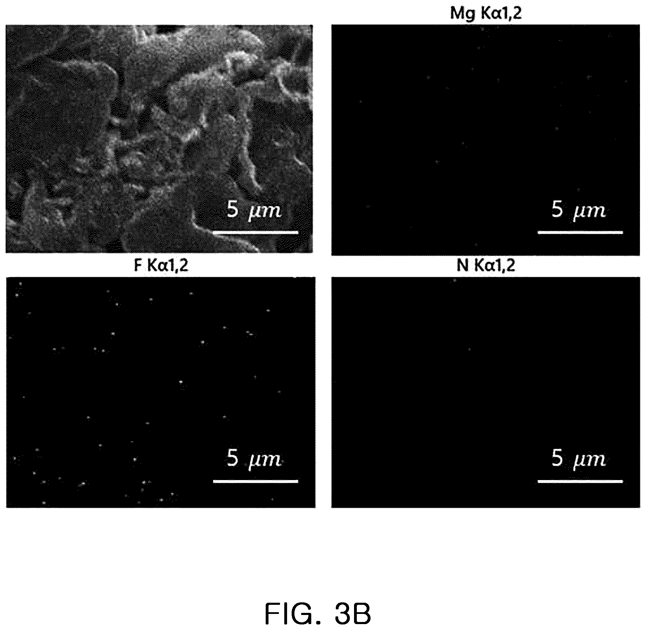

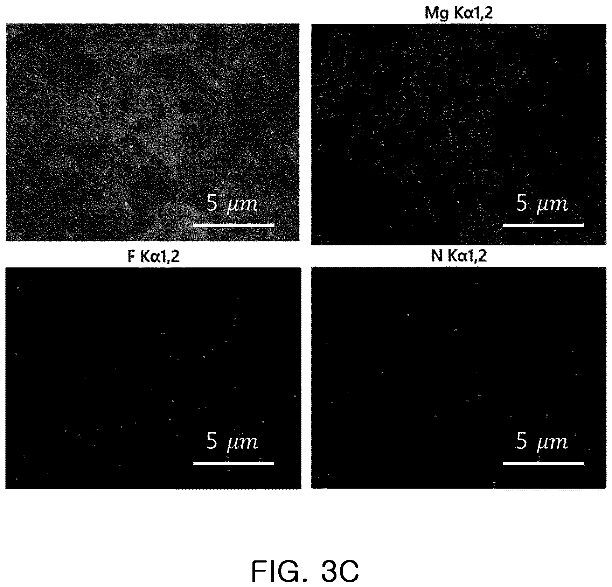

FIGS. 3B and 3C are diagrams illustrating results of observing, at different analysis positions, an SEM observation image and an EDS analysis image of an anode protective film surface on which lithium is electrodeposited by charging a lithium metal battery including an anode according to Comparative Example 1.

### Lithium Metal Anode Protective Film

A lithium metal anode protective film 20 according to an embodiment may include lithium nitride (Li₃N) nanoparticles, lithium-magnesium (Li-Mg) alloy nanoparticles, or a combination thereof.

As described above, the lithium metal anode protective film 20 may include lithium nitride (Li₃N) nanoparticles, nano-sized lithium-containing particles, lithium-magnesium (Li-Mg) alloy nanoparticles, or a combination thereof, and thus may have excellent ion conductivity and electrochemical stability and may induce uniform electrodeposition of lithium ions. The lithium nitride (Li₃N) nanoparticles and the lithium-magnesium (Li-Mg) alloy nanoparticles may be formed on a surface of a lithium metal layer through an electrochemical reaction during a battery charging/discharging process, and the lithium metal anode protective film 20 may include the lithium nitride (Li₃N) nanoparticles, the lithium-magnesium (Li-Mg) alloy nanoparticles, or the combination thereof, formed through such a reaction. Hereinafter, the lithium nitride (Li₃N) nanoparticles and the lithium-magnesium (Li-Mg) alloy nanoparticles are described in more detail.

When a protective film 20 is formed on a surface of a lithium metal layer 10 of the lithium metal anode, lithium ions participating in the electrochemical reaction may need to additionally pass through the protective film, resulting in an increase in resistance. In this regard, when the lithium metal anode protective film 20 includes lithium nitride (Li₃N) nanoparticles, a lithium-containing compound having highly excellent ion conductivity, electrochemical stability, and the like, an increase in resistance due to the protective film may be alleviated, and electrochemical stability may be ensured.

In addition, the lithium-magnesium (Li-Mg) alloy nanoparticles may be an alloy-type material formed by reacting magnesium (Mg), corresponding to a lithium-friendly metal, with lithium ions, and the lithium-friendly metal may serve as a seed to lower a lithium nucleation barrier by electrochemically reacting with lithium ions. As a result, the lithium-magnesium (Li-Mg) alloy nanoparticles may lower a nucleation polarization overpotential during electrodeposition of lithium ions, thereby inducing uniform electrodeposition behavior of lithium ions. Accordingly, when the lithium metal anode protective film 20 includes the lithium-magnesium (Li-Mg) alloy nanoparticles, uniform electrodeposition behavior of lithium ions may be induced to effectively suppress growth of lithium dendrites, and to effectively prevent issues such as a reduction in irreversible capacity, an internal short-circuit of a battery, and the like.

The lithium metal anode protective film 20 may include only the lithium nitride (Li₃N) nanoparticles described above, only the lithium-magnesium (Li-Mg) alloy nanoparticles, or both the lithium nitride (Li₃N) nanoparticles and the lithium-magnesium (Li-Mg) alloy nanoparticles.

Both the lithium nitride (Li₃N) nanoparticles and the lithium-magnesium (Li-Mg) alloy nanoparticles may be nano-sized lithium-containing particles, and diameters thereof may each independently be 1 to 200 nm. For example, the diameters of the lithium nitride (Li₃N) nanoparticles and the lithium-magnesium (Li-Mg) alloy nanoparticles may each independently be 200 nm or less, 150 nm or less, or 100 nm or less, and may be 1 nm or more or 10 nm or more.

When the sizes of the lithium nitride (Li₃N) nanoparticles and the lithium-magnesium (Li-Mg) alloy nanoparticles are greater than or equal to a micro size, a thickness of the protective film 20 including at least one of the lithium nitride (Li₃N) nanoparticles and the lithium-magnesium (Li-Mg) alloy nanoparticles may excessively increase. Thus, there may be a limitation in improving energy density of an anode, and it may be difficult to form a uniform protective film due to an uneasy electrochemical reaction. In addition, when the lithium nitride (Li₃N) nanoparticles and the lithium-magnesium (Li-Mg) alloy nanoparticles have an excessively small size, it may be difficult to remain as one particle, and thus it may be substantially impossible to obtain an effect of improving protective film performance. Accordingly, when the sizes of the lithium nitride (Li₃N) nanoparticles and the lithium-magnesium (Li-Mg) alloy nanoparticles are adjusted as described above, the protective film having excellent performance may be uniformly formed to have an appropriate thickness, thereby effectively improving energy density, stability, or the like, of an anode.

The lithium metal anode protective film 20 may further include magnesium nitride (Mg₃N₂) nanoparticles. The magnesium nitride (Mg₃N₂) nanoparticles may be a material that may be used when the protective film 20 is prepared, and may be converted into the lithium nitride (Li₃N) nanoparticles or the lithium-magnesium (Li-Mg) alloy nanoparticles described above during an electrochemical reaction occurring during a cell driving process. That is, in the lithium metal anode protective film 20 according to an embodiment, the magnesium nitride (Mg₃N₂) nanoparticles may not be converted into the lithium nitride (Li₃N) nanoparticles or the lithium-magnesium (Li-Mg) alloy nanoparticles during an electrochemical reaction, and may be present in the protective film 20. Conversely, the lithium metal anode protective film 20 according to another embodiment, all of the magnesium nitride (M_{g}3N₂) nanoparticles may be converted into the lithium nitride (Li₃N) nanoparticles or the lithium-magnesium (Li-Mg) alloy nanoparticles, such that the magnesium nitride (Mg₃N₂) nanoparticles may not be substantially present in the protective film 20.

The magnesium nitride (Mg₃N₂) nanoparticles may also be nano-sized particles, and may have a diameter of 1 to 200 nm. For example, a diameter of each of the magnesium nitride (Mg₃N₂) nanoparticles may be 200 nm or less, 150 nm or less, or 100 nm or less, and may be 1 nm or more or 10 nm or more.

As described above, a material substantially contributing to stabilization of lithium metal when the lithium metal anode protective film 20 is formed may be the lithium nitride (Li₃N) nanoparticles or the lithium-magnesium (Li-Mg) alloy nanoparticles into which the magnesium nitride (Mg₃N₂) nanoparticles are converted. When a size of each of the magnesium nitride (Mg₃N₂) nanoparticles is greater than or equal to a micro size, a conversion reaction to the lithium nitride (Li₃N) nanoparticles or the lithium-magnesium (Li-Mg) alloy nanoparticles may not easily occur, and thus the protective film may not be uniformly formed, and may not substantially contribute to an improvement in protective film performance.

In addition, when the magnesium nitride (Mg₃N₂) nanoparticles have an excessively small size, it may be substantially impossible to obtain an effect of improving protective film performance through the magnesium nitride (Mg₃N₂) nanoparticles. Accordingly, when the sizes of the magnesium nitride (Mg₃N₂) nanoparticles are adjusted as described above, a conversion reaction to the lithium nitride (Li₃N) nanoparticles or the lithium-magnesium (Li-Mg) alloy nanoparticles may easily occur, thereby effectively improving performance of the protective film including the same.

The diameter of each of the magnesium nitride (Mg₃N₂) nanoparticles may be greater than a diameter of each of the lithium nitride (Li₃N) nanoparticles and a diameter of each the lithium-magnesium (Li-Mg) alloy nanoparticles. Specifically, the diameter of each of the magnesium nitride (Mg₃N₂) nanoparticles may be greater than the diameter of each of the lithium nitride (Li₃N) nanoparticles and the diameter of each of the lithium-magnesium (Li-Mg) alloy nanoparticles within a range in which the magnesium nitride (Mg₃N₂) nanoparticles, the lithium nitride (Li₃N) nanoparticles, and the lithium-magnesium (Li-Mg) alloy nanoparticles respectively satisfy the above-described diameter conditions. In this case, the magnesium nitride (Mg₃N₂) nanoparticles may act as a stable material in which no additional side reaction occurs, such that the protective film may have more excellent stability.

The lithium metal anode protective film 20 may further include lithium fluoride (LiF). Lithium fluoride (LiF) may be a lithium-containing compound having excellent mechanical strength or the like. When the protective film 20 includes lithium fluoride (LiF), the protective film may have further improved mechanical strength. Lithium fluoride (LiF) may be formed from a polymer containing fluorine (F), and specifically, may be formed by combining fluorine (F) contained in the polymer with lithium ions through an electrochemical reaction occurring during a cell driving process. The polymer containing fluorine (F) may function as a binder when the lithium metal anode protective film 20 is prepared. According to an embodiment, the polymer containing fluorine (F) may be polyvinylidene difluoride (PVDF), a polyvinylidene difluoride-hexafluoropropylene copolymer (PVDF-co-HFP), or a combination thereof.

According to another embodiment, the polymer containing fluorine (F) may have a semi-crystalline structure including both a crystallized portion and a partially amorphous portion, and may be a copolymer in which two or more types of monomers each containing fluorine (F) are copolymerized, and may include a crystallized structural unit and an amorphous structural unit. For example, the polymer containing fluorine (F) may include a polyvinylidene difluoride-hexafluoropropylene copolymer (PVDF-co-HFP). Here, the copolymer may include an alternating copolymer, a block copolymer, a random copolymer, a branched copolymer, a crosslinked copolymer, or all of these.

Although not limited to a specific theory, the PVDF-co-HFP may be a copolymer having a semi-crystalline structure including both a crystallized portion (PVDF) and a partially amorphous portion (HFP). When the protective film of the lithium metal anode includes the same, mechanical strength of the protective film may be ensured by the crystallization portion, and lithium-ion conductivity may be further improved by the amorphous portion.

The lithium metal anode protective film 20 may further include a polymer containing fluorine (F). Fluorine (F) contained in the polymer may react with lithium ions during an electrochemical reaction occurring during a cell driving process to form lithium fluoride (LiF). In the lithium metal anode protective film 20, the polymer containing fluorine (F) may form lithium fluoride (LiF) during an electrochemical reaction, and the polymer containing fluorine (F) may be present in the lithium metal anode protective film 20 without any change. For example, the polymer containing fluorine (F) may be polyvinylidene difluoride (PVDF), a polyvinylidene difluoride-hexafluoropropylene copolymer (PVDF-co-HFP), or a combination thereof.

The lithium metal anode protective film 20 may include magnesium nitride (Mg₃N₂) nanoparticles and a polymer containing fluorine (F). According to an embodiment, a weight of the magnesium nitride (Mg₃N₂) nanoparticles, included in the lithium metal anode protective film 20, may be greater than a weight of the polymer containing fluorine (F), included in the lithium metal anode protective film.

A thickness of the lithium metal anode protective film 20 may be 10 µm or less. In addition, a thickness of the lithium metal anode protective film 20 may be 500 nm or more. For example, a thickness of the lithium metal anode protective film 20 may be 6 µm or less or 2 µm or less, and may be 1 µm or more. As the thickness of the lithium metal anode protective film 20 decreases, the anode may have further improved energy density. However, when the lithium metal anode protective film 20 has an excessively small thickness, the lithium metal anode protective film 20 may have lowered mechanical strength, and may not substantially contribute to an improvement in anode performance through formation of the protective film. Accordingly, when the thickness of the protective film is adjusted within the above-described range, energy density of the anode may be improved to be at an excellent level within a range that does not affect mechanical strength of the protective film or the like.

### Lithium Metal Anode and Method of Preparing Lithium Metal Anode

A lithium metal anode 100 according to an embodiment may include a lithium metal anode protective film 20 according to one of the above-described embodiments. Specifically, the lithium metal anode 100 may include a lithium metal layer 10 and a lithium metal anode protective film 20 formed on at least one surface of the lithium metal layer. Detailed descriptions of the lithium metal anode protective film 20 may overlap the above description, and thus descriptions thereof will be omitted.

The lithium metal layer 10 may include lithium metal or an alloy thereof, and may be a metal layer substantially formed of only lithium metal. A thickness of the lithium metal layer 10 is not limited, and may be, for example, 1 µm to 200 µm.

The lithium metal anode 100 may selectively further include an anode current collector. Specifically, the lithium metal anode 100 according to an embodiment, having a structure in which an anode current collector is not included, may include a lithium foil, a free-standing-type lithium metal layer, and the lithium metal anode 100 according to another embodiment, having a structure in which an anode current collector is further included, may include an anode current collector, a lithium metal layer 10 formed on at least one surface of the anode current collector, and a lithium metal anode protective film 20 formed on one surface of the lithium metal layer.

The anode current collector may be a current collector having appropriately excellent conductivity and adhesion to a lithium metal layer, and a type, thickness, or the like thereof is not limited. For example, the anode current collector may be a copper foil, a nickel foil, a stainless-steel foil, a titanium foil, a nickel foam, a copper foam, a polymer substrate coated with a conductive metal, or combinations thereof, and may have a thickness of 10 µm to 100 µm.

The lithium metal anode 100 may be prepared by an anode preparing method to be described below.

A method of preparing a lithium metal anode according to an embodiment may include preparing a solution containing magnesium nitride (Mg₃N₂) nanoparticles, and forming a lithium metal anode protective film 20 on at least one surface of a lithium metal layer 10 using the solution.

The method may further improve electrochemical stability of the protective film by forming a material for protecting a surface of the lithium metal layer 10 on the surface of the lithium metal layer by an in-situ reaction, and may prevent unnecessary formation of a material for stabilizing the lithium metal layer.

The magnesium nitride (Mg₃N₂) nanoparticles may be a material that may be converted into lithium nitride (Li₃N) nanoparticles and lithium-magnesium (Li-Mg) alloy nanoparticles through an electrochemical reaction occurring during a cell driving process, and the method may reduce processing time and costs through a solution process using a solution containing nano-sized magnesium nitride (Mg₃N₂) nanoparticles, and a lithium metal anode including a protective film having excellent performance may be prepared with high productivity. Detailed descriptions of the magnesium nitride (Mg₃N₂) nanoparticles, lithium nitride (Li₃N) nanoparticles, and lithium-magnesium (Li-Mg) alloy nanoparticles may overlap the above descriptions, and thus descriptions thereof will be omitted.

The solution may be prepared by adding the magnesium nitride (Mg₃N₂) nanoparticles to an organic solvent. In this case, a type of the organic solvent is not limited as long as it does not substantially react with lithium metal and magnesium nitride (Mg₃N₂), and is capable of appropriately dissolving a material used as a binder (for example, a polymer containing fluorine (F). For example, the organic solvent may be at least one selected from tetrahydrofuran (THF), n-methyl-2-pyrrolidone (NMP) dimethylformamide (DMF), dimethylacetamide (DMAC), dimethyl sulfoxide (DMSO), and acetonitrile.

An operation of preparing the solution may further include an operation of performing ultrasonic treatment on the organic solvent to which magnesium nitride (Mg₃N₂) nanoparticles are added. When the operation of preparing the solution further includes the operation of performing ultrasonic treatment on the organic solvent to which magnesium nitride (Mg₃N₂) nanoparticles are added, the magnesium nitride (Mg₃N₂) nanoparticles may be more evenly dispersed in the organic solvent. The ultrasonic treatment may be performed for 10 minutes to 100 minutes, specifically, 20 minutes to 60 minutes.

The solution may further include a polymer containing fluorine (F). The polymer containing fluorine (F) may form lithium fluoride (LiF) having excellent mechanical strength or the like. Specifically, lithium fluoride (LiF) may be formed by combining fluorine (F) contained in the polymer with lithium ions through an electrochemical reaction occurring during a cell driving process. Accordingly, when the solution further includes the polymer containing fluorine (F), the lithium metal anode protective film 20 having further improved mechanical strength or the like may be prepared.

When the solution further includes the polymer containing fluorine (F), the order of adding the magnesium nitride (Mg₃N₂) nanoparticles and the polymer containing fluorine (F) is not limited, and the two components may be simultaneously added. For example, a method of preparing the solution may include an operation of preparing a first solution by adding magnesium nitride (Mg₃N₂) nanoparticles having a diameter of 500 nm or less to an organic solvent, and an operation of preparing a second solution by adding a polymer containing fluorine (F) to the first solution, and the method of preparing a lithium metal anode may form a protective film on at least one surface of the lithium metal layer 10 using the second solution prepared in the above-described manner.

The operation of preparing the first solution may further include an operation of performing ultrasonic treatment on the organic solvent to which the magnesium nitride (Mg₃N₂) nanoparticles are added, and the operation of preparing the second solution may further include an operation of performing ultrasonic treatment on the first solution to which the polymer containing fluorine (F) is added and then stirring the same. In this case, the magnesium nitride (Mg₃N₂) nanoparticles and the polymer containing fluorine (F) may be more evenly dispersed in the organic solvent. The ultrasonic treatment may be performed for 10 minutes to 100 minutes, specifically, 20 minutes to 60 minutes, and the stirring process may be performed for 12 hours to 48 hours.

The polymer including fluorine (F) may be polyvinylidene difluoride (PVDF), a polyvinylidene difluoride-hexafluoropropylene copolymer (PVDF-co-HFP), or a combination thereof. Detailed descriptions of the polymer including fluorine (F) may overlap the above description, and thus descriptions thereof will be omitted.

The solution may include the magnesium nitride (Mg₃N₂) nanoparticles and the polymer containing fluorine (F). According to an embodiment, a weight of the magnesium nitride (Mg₃N₂) nanoparticles, included in the solution, may be greater than a weight of the polymer containing fluorine (F), included in the solution. For example, a weight ratio of the magnesium nitride (Mg₃N₂) nanoparticles and the polymer containing fluorine (F), included in the solution, may be 1:1 to 10:1, or 1.5:1 to 4:1. When the weight ratio of the magnesium nitride (Mg₃N₂) nanoparticles and the polymer containing fluorine (F), included in the solution, is the same as that described above, a lithium metal anode, including a protective film having excellent performance as a protective film appropriately including both at least one of the lithium nitride (Li₃N) nanoparticles and the lithium-magnesium (Li-Mg) alloy nanoparticles and lithium fluoride (LiF), may be prepared.

The operation of forming the lithium metal anode protective film 20 on at least one surface of the lithium metal layer 10 using the solution may include a process of coating the solution on at least one surface of the lithium metal layer and then drying the same.

The coating process is not limited, and may be performed using a method such as doctor blade coating, dip coating, bar coating, casting, or the like.

The drying process may be performed at 10°C to 50°C, specifically at room temperature (20°C to 25°C), for 12 to 48 hours.

### Lithium Metal Battery

A lithium metal battery according to an embodiment may include a lithium metal anode according to one of the above-described embodiments. Specifically, the lithium metal battery may include a lithium metal anode 100 according to one of the above-described embodiments, a cathode, and an electrolyte, and may selectively further include a separator or may not selectively further include the separator.

The cathode is not limited as long as it is generally used for a secondary battery, and may include a lithium-transition metal oxide as a cathode active material, for example, a lithium-transition metal oxide such as lithium cobalt oxide (LiCoO₂), lithium manganese oxide (LiMn₂O₄), or lithium nickel oxide (LiNiO₂), or a lithium-transition metal composite oxide in which a portion of the above-described transition metals is replaced with another transition metal. Specifically, the cathode active material may be an NCM-based cathode active material represented by Formula 1 below; or an LLO (Li rich layered oxide, over-lithiated oxide or over-lithiated layered oxide (OLO))-based cathode active material represented by Formula 2 below.

[Formula 1] LiₐNi_{b}M_{1-b}O₂

In Formula 1, 0.9≤a≤1.2, b≥0.5, and M may be at least one of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba, and Zr.

Specifically, in Formula 1, 0.95≤a≤1.08, and b may be 0.6 or more, 0.8 or more, greater than 0.8, 0.9 or more, or 0.98 or more.

Specifically, in Formula 1, M may include Co, Mn or Al. More specifically, M may include Co and Mn, and may selectively further include Al.

[Formula 2] Li₁₊ₓM₁₋ₓO₂

In Formula 2, 0≤x≤0.4 may be satisfied, and M may be at least one of Na, Mg, Ca, Y, Ti, Zr, Hf, V, Nb, Ta, Cr, Mo, W, Ni, Mn, Co, Fe, Cu, Ag, Zn, B, Al, Ga, C, Si, Sn, Ba, and Zr.

Specifically, in Formula 2, M may include Ni, Co, Mn, or Al, and more specifically, may include Ni, Co, and Mn, and may selectively further include Al.

In addition, the cathode active material may be a lithium ferrophosphate (LFP)-based cathode active material represented by a formula of LiFePO₄.

In addition, the lithium-transition metal oxide may be secondary particles formed as substantially one particle by assembling or aggregating a plurality of primary particles or may be in a single particle form. The term "single particle form" may be used to, for example, exclude secondary particles formed as substantially one particle by assembling or aggregating a plurality of primary particles (for example, greater than 10 primary particles). However, the single particle form may not exclude having a form of a single body formed by 2 to 10 single particles attached to each other or coming into close contact with each other. In some embodiments, the cathode active material may have both a secondary particle form and a single particle form.

The lithium metal battery may further include or may not further include a separator. When the separator is further included, the separator is not limited as long as it is applicable to a lithium secondary battery according to the related art. For example, the separator may include a porous substrate, and the porous substrate may be a polyolefin-based porous substrate. The polyolefin-based porous substrate may have a plurality of pores, and may be a substrate generally used in an electrochemical device. The polyolefin-based porous substrate may be selected from the group consisting of, for example, a polyethylene single film, a polypropylene single film, a polypropylene/polypropylene double film, a polypropylene/polypropylene triple film, and a polyethylene/polypropylene/polyethylene triple film, but the present disclosure is not limited thereto.

The lithium metal battery may be accommodated, together with an electrolyte, in a case. In this case, the electrolyte may be a liquid electrolyte including a lithium salt and an organic solvent, and the lithium salt may be represented by a formula of Li⁺X⁻, and may include at least one or two of F⁻, Cl⁻, Br⁻, I⁻, NO₃⁻, N(CN)₂⁻, BF₄⁻, ClO₄⁻, PF₆⁻, or the like, as an anion (X⁻), but the present disclosure is not limited thereto. In addition, the organic solvent may include, for example, at least one or two of propylene carbonate (PC), ethylene carbonate (EC), diethyl carbonate (DEC), dimethyl carbonate (DMC), ethylmethyl carbonate (EMC), or the like, but the present disclosure is not limited thereto.

The lithium metal battery may be an all-solid-state battery including the lithium metal anode 100 according to one of the above-described embodiments, a cathode, and a solid electrolyte layer disposed between the anode and the cathode.

A solid electrolyte, included in the solid electrolyte layer, is not limited, and may include at least one of solid electrolytes according to the related art. For example, the solid electrolyte may be an oxide-based solid electrolyte such as Li₇La₃Zr₂O₁₂(LLZO) or the like, a sulfide-based solid electrolyte such as Thio-LISICON, β-Li₃PS₄, Li₇P₃S₁₁, Li₂S-P₂S₅, LGPS, an argyrodite-based compound, or the like, or a polymer-based solid electrolyte such as i) a solid polymer electrolyte formed by adding a polymer resin such as a polyether-based polymer or the like to a lithium salt, and ii) a polymer gel electrolyte in which an organic electrolyte containing an organic solvent and a lithium salt is impregnated into a polymer resin.

The argyrodite-based compound may be represented by Formula 3.

[Formula 3] Li⁺ₐA⁺_{b}Q_{c}X⁻_{d}

In Formula 3, 1≤a≤12, 0≤b≤5, 0≤c≤10, 0≤d≤2 may be satisfied, A may be at least one of P, As, Ge, Ga, Sb, Si, Sn, Al, In, Ti, V, Nb, or Ta, Q may be at least one of S, Se, or Te, and X may be at least one of Cl, Br, I, F, CN, OCN, SCN, or N₃.

Specifically, the argyrodite-based compound may be a compound represented by a formula of Li₇₋ₓPS₆₋ₓClₓ (0≤x≤2), Li₇₋ₓPS₆₋ₓBrₓ (0≤x≤2), or Li₇₋ₓPS₆₋ₓIₓ (0≤x≤2).

More specifically, the argyrodite-based compound may be a compound represented by a formula such as Li₆PS₅Cl, Li₆PS₅Br, Li₆PS₅I, Li_{6.5}Sb_{0.5}Ge_{0.5}S₅I, Li_{5.7}PS_{4.7}Cl_{1.3}, Li_{6.6}Sb_{0.5}Si_{0.6}S₅I, or the like.

When the lithium metal battery includes the above-described lithium metal anode 100, growth of lithium dendrites may be effectively suppressed by a protective film 20 capable of inducing uniform lithium electrodeposition behavior, and thus the lithium metal battery may have excellent lifespan properties, electrochemical performance, safety, or the like.

### Examples

### Lithium Metal Anode Protective Film

### 1) Example

30 mg of magnesium nitride (Mg₃N₂) powder having a nano size (a diameter: 100 nm) was added to 0.5 ml of tetrahydrofuran (THF), an organic solvent, and then ultrasonic treatment was performed for 30 minutes using an ultrasonic disperser to prepare a first solution in which the magnesium nitride powder was evenly dispersed in the organic solvent.

Thereafter, 15 mg of a polyvinylidene difluoride-hexafluoropropylene copolymer (PVDF-co-HFP), a polymer containing fluorine (F), was added to the first solution, ultrasonic treatment was performed on the first solution for 30 minutes using an ultrasonic disperser to evenly disperse components in the solution, and the first solution was stirred for 24 hours to prepare a second solution.

The second solution was coated on a surface of a lithium metal layer (a thickness: 20 µm) using a doctor blade method, and dried at room temperature under a vacuum condition for 24 hours to prepare a lithium metal anode according to Example in which a protective film having a thickness of about 2 µm was formed on the surface of the lithium metal layer.

In this regard, a left image of FIG. 2A may be an SEM analysis image of a protective film surface on the anode according to Example, a middle image of FIG. 2A may be a magnesium (Mg) element distribution (Mg Kα) image of the protective film surface on the anode according to Example using energy dispersion spectroscopy (EDS), and a right image of FIG. 2A may be a nitrogen (N) element (N Kα) distribution image of the protective film surface on the anode according to Example using EDS.

Referring to FIG. 2A, it may be confirmed that a protective film according to Example including magnesium nitride (Mg₃N₂) nanoparticles was formed.

### 2) Comparative Example 1

A lithium metal anode according to Comparative Example 1 was prepared in the same manner as in Example 1, except that magnesium nitride (Mg₃N₂) powder having a micro size (a diameter: greater than 45 µm) was applied as magnesium nitride (Mg₃N₂) powder.

In this regard, a left image of FIG. 2B may be an SEM analysis image of a protective film surface on the anode according to Comparative Example 1, a middle image of FIG. 2B may be a magnesium (Mg) element distribution (Mg Kα) image of the protective film surface on the anode according to Comparative Example 1 using EDS, and a right image of FIG. 2B may be a nitrogen (N) element (N Kα) distribution image of the protective film surface on the anode according to Comparative Example 1 using EDS.

Referring to FIG. 2B, it may be confirmed that a protective film according to Comparative Example 1 including magnesium nitride (Mg₃N₂) microparticles was formed.

### 3) Comparative Example 2

An anode, in which a protective film was not formed on a surface of a lithium metal layer (a thickness: 20 µm), was applied as a lithium metal anode of Comparative Example **2.**

### Lithium Metal Battery

Lithium metal batteries according to Example and Comparative Examples were prepared using a Li/NCM cell including an anode, prepared in the above-described manner, and a cathode including an NCM-based active material, the cathode having an area capacity of 3 mAh/cm².

### 3. Capacity Retention Evaluation

The lithium metal batteries, prepared in the above-described manner, were repeatedly subjected to 50 cycles of charging at 0.5C and discharging at 0.5C at room temperature in an SOC range of 0% to 100%, and capacity retention rates (a discharge capacity/an initial discharge capacity after 50 cycles) of the lithium metal batteries according to the number of times of cycles were measured as %. Results thereof are indicated in Table 1 below.

After the lithium metal batteries were charged to electrodeposit lithium with respect to anodes, SEM analysis images and EDS analysis images of protective film surfaces according to Example and Comparative Example 1 were observed. The images are illustrated in FIGS. 3A to 3C, respectively.

**[Table 1]**

| **Division** | **Protective film properties** | | | **Capacity retention rate (%)** |
|---|---|---|---|---|
| | **Whether a protective film is present** | **Mg₃N₂ particle diameter** | **Li₃N particle diameter /Li-Mg particle diameter** | |
| **Example** | O | About 100 nm | < 100 nm | 92% |
| **Comparative Example 1** | O | Greater than 45 µm | Multiple unreacted materials occur | 77% |
| **Comparative Example 2** | X | - | - | 68% |

Referring to FIG. 3A, it was analyzed that in an anode according to Example, lithium (Li) was electrodeposited around nano-sized magnesium nitride (Mg₃N₂) nanoparticles included in a protective film, and lithium nitride (Li₃N) nanoparticles, formed by reacting the magnesium nitride (Mg₃N₂) nanoparticles with lithium (Li), and the lithium-magnesium (Li-Mg) alloy nanoparticles were included in the protective film.

Conversely, referring to FIGS. 3B and 3C, it was found that magnesium (Mg) was not detected in a portion of an anode according to Comparative Example 1 on which lithium (Li) was electrodeposited. That is, it was analyzed that lithium (Li) was not electrodeposited around micro-sized magnesium nitride (Mg₃N₂) particles, and the micro-sized magnesium nitride (Mg₃N₂) particles remained intact without reacting with lithium (Li).

In addition, referring to Table 1, it was found that the anode according to Example, in which the protective film including the nano-sized magnesium nitride (Mg₃N₂) nanoparticles, is formed had a more excellent capacity retention rate than that of the anode according to Comparative Example 2 in which a protective film is not formed, and also had a more excellent capacity retention rate than that of the anode according to Comparative Example 1 in which a protective film including the micro-sized magnesium nitride (Mg₃N₂) particles is formed.

Referring to the above-described results, it may be determined that the protective film formed using the micro-sized magnesium nitride (Mg₃N₂) particles relatively does not function properly as a protective film, and that the protective film formed using the nano-sized magnesium nitride (Mg₃N₂) nanoparticles induce uniform lithium electrodeposition to suppress growth of lithium dendrites and to effectively improve electrochemical performance, efficiency, safety, or the like of a battery.

Only specific examples of implementations of certain embodiments are described. Variations, improvements and enhancements of the disclosed embodiments and other embodiments may be made based on the disclosure of this patent document.

## Claims

1. A lithium metal anode protective film comprising:
lithium nitride (Li₃N) nanoparticles, lithium-magnesium (Li-Mg) alloy nanoparticles, or a combination thereof.

2. The lithium metal anode protective film of claim 1, further comprising:
magnesium nitride (Mg₃N₂) nanoparticles.

3. The lithium metal anode protective film of claim 2, wherein a diameter of each of the magnesium nitride (Mg₃N₂) nanoparticles is greater than a diameter of each of the lithium nitride (Li₃N) nanoparticles and a diameter of each of the lithium-magnesium (Li-Mg) alloy nanoparticles.

4. The lithium metal anode protective film of anyone of claims 1 to 3, further comprising:
lithium fluoride (LiF).

5. The lithium metal anode protective film of anyone of claims 1 to 4, further comprising:
a polymer containing fluorine (F).

6. The lithium metal anode protective film of claim 5, wherein the polymer containing fluorine (F) is polyvinylidene difluoride (PVDF), a polyvinylidene difluoride-hexafluoropropylene copolymer (PVDF-co-HFP), or a combination thereof.

7. The lithium metal anode protective film of anyone of claims 1 to 6, wherein
the lithium metal anode protective film further includes magnesium nitride (Mg₃N₂) nanoparticles and a polymer containing fluorine (F), and
a weight of the magnesium nitride (Mg₃N₂) nanoparticles, included in the lithium metal anode protective film, is greater than a weight of the polymer containing fluorine (F), included in the lithium metal anode protective film.

8. The lithium metal anode protective film of anyone of claims 1 to 7, wherein a diameter of each of the lithium nitride (Li₃N) nanoparticles and a diameter of each of the lithium-magnesium (Li-Mg) alloy nanoparticles are each independently 1 to 200 nm.

9. The lithium metal anode protective film of claim 2 or 3, wherein a diameter of each of the magnesium nitride (Mg₃N₂) nanoparticles is 1 to 200 nm.

10. The lithium metal anode protective film of anyone of claims 1 to 9, wherein a thickness of the lithium metal anode protective film is 500 nm to 10 µm.

11. A lithium metal anode comprising:
a lithium metal anode protective film of anyone of claims 1 to 10.

12. A method of preparing a lithium metal anode protective film, the method comprising:
preparing a solution including magnesium nitride (Mg₃N₂) nanoparticles; and
forming a lithium metal anode protective film on at least one surface of a lithium metal layer using the solution.

13. The method of claim 12, wherein the solution further includes a polymer containing fluorine (F).

14. The method of claim 12 or 13, wherein
the solution further includes magnesium nitride (Mg₃N₂) nanoparticles and a polymer containing fluorine (F), and
a weight of the magnesium nitride (Mg₃N₂) nanoparticles, included in the solution, is greater than a weight of the polymer containing fluorine (F), included in the solution.

15. A lithium metal battery comprising:
a lithium metal anode of claim 11.
